**Europäisches Patentamt**

**European Patent Office**

**Office européen des brevets**

(19)

(11) Veröffentlichungsnummer: **0 083 695**
**B1**

(12) # EUROPÄISCHE PATENTSCHRIFT

(45) Veröffentlichungstag der Patentschrift:
**03.07.85**

(51) Int. Cl.⁴: **C 09 K 3/18**

(21) Anmeldenummer: **82109539.5**

(22) Anmeldetag: **15.10.82**

(54) Streumittel zur Beseitigung oder Verhinderung von Schnee- und/oder Eisglätte.

(30) Priorität: **13.01.82 DE 3200734**

(43) Veröffentlichungstag der Anmeldung:
**20.07.83 Patentblatt 83/29**

(45) Bekanntmachung des Hinweises auf die Patenterteilung:
**03.07.85 Patentblatt 85/27**

(84) Benannte Vertragsstaaten:
**AT BE CH LI LU NL SE**

(56) Entgegenhaltungen:
**DE - A - 2 148 505**
**DE - A - 2 219 245**
**DE - A - 2 849 810**

(73) Patentinhaber: **Hebel Alzenau GmbH & Co.,**
**Brentanostrasse 2, D-8755 Alzenau (DE)**

(72) Erfinder: **Straub, Roland, Lindenstrasse 47,**
**D-6458 Rodenbach (DE)**

(74) Vertreter: **Liebau, Gerhard, Dipl.-Ing., Birkenstrasse 39,**
**D-8900 Augsburg 22 (DE)**

ACTORUM AG

## Beschreibung

Die Erfindung betrifft ein Streumittel zur Beseitigung oder Verhinderung von Schnee- und/oder Eisglätte in Form eines Gemenges aus Bimsstein in körniger Form als Schleifmittel, Calciumchlorid und einer weiteren Komponente.

Ein bekanntes Streumittel (DE-AS 28 49 810) besteht aus 3% bis 15% Harnstoff mit etwa 2 bis 7 mm Körnung, aus 34% bis 47% Bimsstein mit 2 bis 7 mm Körnung und aus 30% bis 60% Calciumchlorid. Dieses bekannte Streumittel hat den Nachteil, dass das Gemenge bzw. das entstehende Schmelzwasser aufgrund des Calciumchloridanteiles sauer reagiert, was zu einer Korrosion von Metallteilen an Kraftfahrzeugen und zu dermatologischen Irritationen an Tierpfoten führen kann.

Der Erfindung liegt die Aufgabe zugrunde, ein neues auftauendes Streumittel der eingangs erwähnten Art zu schaffen, welches bei guter auftauender und griffiger Langzeitwirkung trotzdem neutral reagiert, wodurch Korrosionsschäden und die Irritation von Tierpfoten vermieden werden.

Dies wird nach der Erfindung dadurch erreicht, dass das Streumittel aus 20% bis 40% Calciumchlorid, aus gemahlenem Gasbeton mit etwa 1 bis 4 mm Körnung und einem Gewichtsanteil von mindestens 0,8, bezogen auf den Calciumchloridanteil, sowie aus Bimsstein mit einer Körnung von etwa 1 bis 4 mm besteht.

Das neuartige Streumittel hat eine verhältnismässig hohe Auftauleistung und besitzt eine gute Langzeitwirkung. Gleichzeitig wird durch die Verwendung von gemahlenem Gasbeton und Bimsstein jeweils in einer Körnung von 1 bis 4 mm auch eine griffige Wirkung oder Schleifwirkung erzielt. Besonders hervorzuheben ist hierbei die vielfache Funktion des körnigen Gasbetons. Da Gasbeton porös ist, dringen Luftfeuchtigkeit und Calciumchlorid in den Gasbeton ein, wo sie gespeichert und langsam wieder abgegeben werden. Der Gasbeton dient ausserdem als Schleifmittel, welches eine griffige Wirkung erzielt. Durch die Verkehrsbelastung wird jedoch der Gasbeton vollständig zerrieben, so dass er vom Schmelzwasser weggespült wird. Bei der allmählichen Zerkleinerung des Gasbetons wird das in die Poren eingedrungene Calciumchlorid allmählich wieder freigegeben, wodurch ein Langzeiteffekt erzielt wird. Weiterhin hat die Gasbetonkomponente die wichtige Funktion der Neutralisierung. Calciumchlorid selbst reagiert sauer, während Gasbeton alkalisch reagiert. In der Gesamtreaktion resultiert daraus ein Gemisch, das neutral reagiert. Auch das entstehende Schmelzwasser reagiert neutral. Infolgedessen werden Korrosionsschäden an Metallen und auch dermatologische Irritationen an Tierpfoten vermieden. Darüber hinaus wirken die chemisch gebundenen Kalkanteile in dem durch die Verkehrsbelastung zerriebenen Gasbeton düngend auf den Boden und fördern das Pflanzenwachstum.

Der auch in dem neuen Streumittel enthaltene Anteil von Bimsstein dient einem ähnlichen Zweck wie der körnige Gasbeton, er hat jedoch bezüglich des Calciumchlorides keine neutralisierende Wirkung. Da Bimsstein gegenüber Gasbeton jedoch eine höhere Festigkeit aufweist, vergrössert Bimsstein die Griffigkeit des Streumittels und erhält dessen Griffigkeit über einen höheren Zeitraum. Ausserdem hat Bimsstein gegenüber Gasbeton ein geringeres Schüttgewicht, wodurch man bei Ausbringung einer bestimmten Gewichtsmenge des Streumittels pro qm eine bessere Flächendeckung erreichen kann. Um jedoch die neutralisierende Wirkung des Gasbetons sicherzustellen, sollte der Gewichtsanteil des Gasbetons stets mindestens 0,8mal so gross sein wie der Gewichtsanteil des Calciumchlorids.

Erwähnenswert ist noch, dass das Streumittel verhältnismässig billig herstellbar ist und gleichzeitig auch ein Abfallproblem beseitigt wird. Bei der Herstellung von Gasbeton entstehen nämlich Abfälle, die in zerkleinerter körniger Form zur Herstellung des neuartigen Streumittels verwendet werden können. Damit werden diese Abfälle nutzbringend verwendet und brauchen nicht in Deponien gelagert zu werden.

Als besonders vorteilhaft bezüglich der Auftauwirkung, der Langzeitwirkung, der Griffigkeit und der neutralisierenden Wirkung hat sich ein Streumittel erwiesen, das etwa aus 30% Calciumchlorid, aus etwa 35% Gasbeton und aus etwa 35% Bimsstein besteht. Die Korngrösse von Gasbeton und Bimsstein sollte dabei 1 bis 4 mm betragen.

## Patentansprüche

1. Streumittel zur Beseitigung oder Verhinderung von Schnee- und/oder Eisglätte in Form eines Gemenges aus Bimsstein in körniger Form als Schleifmittel, Calciumchlorid und einer weiteren Komponente, dadurch gekennzeichnet, dass das Streumittel aus 20 bis 40% Calciumchlorid, aus gemahlenem Gasbeton mit etwa 1 bis 4 mm Körnung und einem Gewichtsanteil von mindestens 0,8, bezogen auf den Calciumchloridanteil, sowie aus Bimsstein mit einer Körnung von etwa 1 bis 4 mm besteht.

2. Streumittel nach Anspruch 1, dadurch gekennzeichnet, dass es aus etwa 30% Calciumchlorid, aus etwa 35% Gasbeton und aus etwa 35% Bimsstein besteht.

## Claims

1. Spreading agent for removing or preventing slippery surfaces of snow and/or ice, in the form of a mixture consisting of pumice in granular form as abrasive, calcium chloride and a further component, characterized in that the spreading agent consists of 20 to 40% calcium chloride, of crushed aerated concrete having grain sizes of about 1 to 4 mm and a weight portion of at least 0,8 relative to the calcium chloride portion, and of pumice having grain sizes of about 1 to 4 mm.

2. Spreading agent according to claim 1, characterized in that it consists of about 30% calcium chloride, of about 35% aerated concrete and of about 35% pumice.

## Revendications

1. Agent d'épandage en vue d'éliminer ou d'empêcher la formation de couches glissantes de neige et/ou de glace, cet agent étant sous la forme d'un mélange de pierre ponce sous forme granulaire comme abrasif, de chlorure de calcium et d'un autre composant, caractérisé en ce qu'il est constitué de 20 à 40% de chlorure de calcium, de béton-gaz broyé en une granularité d'environ 1 à 4 mm et en une quantité pondérale d'au moins 0,8, calculé sur la quantité de chlorure de calcium, ainsi que de pierre ponce d'une granularité d'environ 1 à 4 mm.

2. Agent d'épandage selon la revendication 1, caractérisé en ce qu'il est constitué d'environ 30% de chlorure de calcium, d'environ 35% de béton-gaz et d'environ 35% de pierre ponce.